Europäisches Patentamt

European Patent Office

Office européen des brevets

(19)

(11) Publication number: **0 127 773**
**A1**

(12) **EUROPEAN PATENT APPLICATION**

(21) Application number: **84104939.8**

(22) Date of filing: **02.05.84**

(51) Int. Cl.³: **A 01 N 25/34**
**A 01 N 25/10, A 01 N 25/12**
**A 01 N 25/14**

(30) Priority: **03.05.83 ZA 833147**

(43) Date of publication of application:
**12.12.84 Bulletin 84/50**

(84) Designated Contracting States:
**AT BE CH DE FR GB IT LI LU NL SE**

(71) Applicant: **THE WELLCOME FOUNDATION LIMITED**
**183-193 Euston Road**
**London NW1 2BP(GB)**

(72) Inventor: **Baker, Rodney Cyril**
**17 Rooikrans Crescent Van Riebeeck Park**
**Kempton Park, Transvaal(ZA)**

(72) Inventor: **van Rensburg, Philippus Jansen**
**3 Rooiels Road Sharonlea, Exit 3**
**Randburg, Transvaal(ZA)**

(74) Representative: **Sandmair, Kurt, Dr. Dr. et al,**
**Patentanwälte Dr. Berg Dipl.-Ing. Stapf Dipl.-Ing.**
**Schwabe Dr. Dr. Sandmair Postfach 86 02 45**
**Stuntzstrasse 16**
**D-8000 München 86(DE)**

(54) **Pesticidal composition.**

(57) The invention concerns a pesticidal composition. It comprises a pesticide, an emulsifier or dispersing agent for the pesticide, and a self-disintegrating agent capable of effervescing or swelling on being contacted with water. The composition conveniently is in the form of an effervescent pesticidal tablet.

EP 0 127 773 A1

Croydon Printing Company Ltd.

## PESTICIDAL COMPOSITION

THIS INVENTION relates to a pesticidal composition.

The present invention provides a pesticidal composition comprising a pesticide, an emulsifier or dispersing agent for the pesticide, and a self-disintegrating agent capable of effervescing or swelling on being contacted with water.

The pesticide conveniently may comprise a synthetic pyrethroid optionally admixed with a synergist (eg piperonyl butoxide). Examples of synthetic pyrethroids are those known as permethrin (ie 3-phenoxybenzyl-($\pm$)-cis,trans -2,2-dimethyl-3-(2,2-dichlorovinyl)cyclopropane-1-carboxylate), deltamethrin (ie S-$\alpha$-cyano-3-phenoxy-benzyl-(IR,3R)2,2-dimethyl-3-(2,2-dibromo vinyl)cyclopropane-1-carboxylate) and tetramethrin (ie 3,4,5,6-tetrahydrophthalimidomethyl ($\pm$)cis, trans-chrysanthemate). Other pesticides which can be used are propoxur (ie 2-isopropoxyphenyl methyl-carbamate), trichlorfon (ie 2,2-trichloro-1-hydroxy-ethylphosphonate), dichlorvos (ie 2,2-dichlorovinyl dimethyl phosphate), fenvalerate (ie $\alpha$-cyano-3-phenoxy benzyl-(RS)- 2(4-chlorophenyl)-3-methylbutyrate, diazinon (ie O,O-diethyl-O-2-isopropyl-6-methyl-pyrimidin-4-ylphosphorothioate, amitraz (ie N,N di-(2,4-xylyliminomethyl) methyl amine), phosmet (ie O,O-dimethyl S-phthalimido-methyl phosphorodithioate) and dursban (ie O,O-diethyl-O-3,5,6-trichloro-2-pyridyl-phosphorothioate). The pesticides can be used singly or in combination. The composition may, for example, contain from one to 20% by weight of pesticide, more conveniently about 8-15% by way of pesticide.

RSB/NDC/X227/17.4.1984

The composition may include, where necessary, materials for preventing the crystallisation of low melting pesticides (eg permethrin) which, when added to the composition in liquid form, could otherwise crystallise at a later stage. Such materials may comprise relatively high boiling (ie low volatility) solvents, other liquid pesticides, piperonyl butoxide and/or standard crystallisation inhibitors.

There may be a single emulsifier or dispersing agent, or a number of emulsifiers or dispersing agents. Examples are those available under the trade names Phenyl Sulphonate CA (from Hoechst) and Tergitol XD (from ICI). An anti-foam material such as dried Silcolapse (from ICI) may also be present. The amount of emulsifier or dispersing agent may range from about 0,1 to 5%, more conveniently about 0,5 to 2,5% by weight.

One example of a self-disintegrating agent that swells on contact with water is a cross-linked polyvinylpyrrolidone (PVP). Alternatively, an acid and a base can be present. For example, tartaric acid and an alkali metal carbonate or bicarbonate, particularly sodium bicarbonate, may be present. A further acid, such as boric acid, may be present as a lubricant. The amount of self-disintegrating material may range from about 5% to 90% by weight. When an acid and a base are present, conveniently about 20% to 45% of the composition is acid, and about 25% to 55% by weight of the composition is the base. Boric acid or other lubricant can be present in an amount of up to about 8% by weight.

RSB/NDC/X227/17.4.1984

The remainder of the composition can be any suitable carrier or excipient. For example, a binder such as that available from BASF under the trade name Luviskol K30 (PVP) can be present in amounts of up to about 94% by weight.

The composition provided by the invention conveniently is formed as a tablet or the like.

The invention also provides a method of making a composition according to the invention, which comprises the steps of

(a) dissolving a pesticide in a solvent, for example methylene dichloride, and adding thereto any optional anti-foam agent which may be present, as well as an emulsifier or dispersing agent;

(b) separately preparing a dry powdered mixture comprising powdered constituents including an agent which effervesces or swells on being contacted with water; and

mixing solution (a) with the powdered constituents (b).

The invention also provides a further method of making a composition according to the invention, which includes the steps of

(a) absorbing onto an absorptive carrier a water or oil based suspension concentrate of a pesticide and a pesticide emulsifier or dispersing agent when it is in liquid form;

RSB/NDC/X227/17.4.1984

(b)    separately preparing a dry powdered mixture
comprising powdered constituents including a pesticide
emulsifier or dispersing agent when it is in dry
powdered form, and a self-disintegrating agent
capable of effervescing or swelling on being
contacted with water; and

(c)    mixing the pesticide-containing absorptive
carrier from step (a) with the powdered constituents
from step (b).

When present, the absorptive carrier may be in
powdered form, eg it may be powdered silica.

The composition may be granulated, eg in a standard
granulator or by means of a sieve.  The granules
can then be dried at about 40-60$^{o}$C, re-screened if
necessary, to give a uniform particle size which may
be tabletted in standard tabletting machines.  It is
particularly convenient to keep the moisture content
less than 1,0% by weight.

In use, the tablets or other composition provided by
the invention may be added to water, whereupon the
composition effervesces and disintegrates, thereby
being provided in a form which is easy to use.  This
aqueous form may be used for the control of pests
around the house on a wide range of surfaces, since
a minimal deposit is left on the surfaces.  It may
be used for the control of ants, cockroaches, flies,
fleas, ticks, or the like.

The composition may be further diluted for use with a
hand pump spray or pressurizable sprayer.  Alternatively,
it may be used as a dip or wash for animals,
particularly household animals such as dogs, or for
controlling insects in animal-keeping areas, for example kennels or baskets.  It can also be used for the
dipping of farm animals such as cattle, sheep and
goats.

The composition provided by the invention is an
advantageous form of composition, and is a very
useful way of supplying a pesticide.  The aqueous
form causes minimum damage to surfaces with which it
comes into contact.

The composition may be in unit dose form, for
example in 5 gm tablets containing about 10% of
insecticide.  One tablet in 500 mls of water would
then give 0,1% dilution rate.  Double this amount
can be used for double the concentration.

The invention is illustrated in non-limiting manner
by reference to the accompanying Example:

EXAMPLE

A tablet was made up from the following constituents,
the amounts being in percent by weight:

| | |
|---|---|
| Permethrin, technical | 10,7 |
| Phenyl Sulphonate CA (emulsifier) | 0,35 |
| Tergitol XD | 0,65 |
| Luviskol K30 (PVP) | 8,00 |
| Boric Acid | 4,9 |
| Tartaric Acid | 31,9 |
| Sodium Bicarbonate | 43,0 |
| Dried Silcolapse (anti-foam) | 0,5. |

RSB/NDC/X227/17.4.1984

The pesticide, emulsifier and the anti-foam agent were mixed together and dissolved in 20 to 100 parts of methylene dichloride. The remaining constituents, which were in powdered form, were mixed together separately. Thereafter, the two sets of constitients were mixed together and granulated and dried at 40-50$^{\circ}$C. The granules were sieved and tabletted to give a pesticidal tablet. When the tablet was contacted with water, it effervesced and disintegrated within 2 minutes, and so was easy to apply for use in the control of pests.

The efficacy of the tablets of the above Example was assessed by trials on a number of surfaces.

Five weeks' control was obtained against ants on wood, glass and stainless steel. A lesser period of protection was recorded on cement, painted cement, painted wood and plastic. Three to four weeks' control was obtained under field conditions.

In addition, a period of one weeks' control was obtained against American cockroaches on stainless steel, and four weeks' control on glass, wood and stainless steel against German cockroaches.

RSB/NDC/X227/17.4.1984

CLAIMS

1.   A pesticidal composition comprising a pesticide,
an emulsifier or dispersing agent for the pesticide,
and a self-disintegrating agent capable of effervescing
or swelling on being contacted with water.

2.   A composition as claimed in Claim 1, wherein the
pesticide is a synthetic pyrethroid.

3.   A composition as claimed in Claim 1, wherein the
pesticide is propoxur, trichlorfon, dichlorvos,
fenvalerate, diazinon, amitraz, phosmet or dursban.

4.   A composition as claimed in any one of the
preceding claims, and containing from 1 to 20% by
weight of pesticide.

5.   A composition as claimed in any one of the
preceding claims, wherein an anti-foam material is
also present.

6.   A composition as claimed in any one of the
preceding claims, wherein the self-disintegrating
agent is polyvinylpyrrolidone or an acid and a base.

7.   A composition as claimed in any one the the
preceding claims in the form of a tablet.

8.   A method of making a pesticidal composition, which
comprises the steps of

(a)   dissolving a pesticide in a solvent and adding an
emulsifier or dispersing agent thereto;

(b)   separately preparing a dry powdered material
comprising an agent which effervesces or swells on
being contacted with water, and any further
powdered constituents for the composition; and mixing the solution (a) with the mixture (b).

9.   A method of making a composition according to
Claim 1, which includes the steps of

(a)   absorbing onto an absorptive carrier a water or
oil based suspension concentrate of a pesticide and
a pesticide emulsifier or dispersing agent when it is
in liquid form;

(b)   separately preparing a dry powdered mixture
comprising powdered constituents including a pesticide
emulsifier or dispersing agent when it is in dry
powdered form, and a self-disintegrating agent capable
of effervescing or swelling on being contacted with
water; and

(c)   mixing the pesticide-containing absorptive carrier
from step (a) with the powdered constituents from step
(b).

10.   The use, in the control of pests, of a composition
as claimed in any one of Claims 1 to 7.

RSB/NDC/X227/17.4.1984

**European Patent Office**

**EUROPEAN SEARCH REPORT**

Application number

EP 84 10 4939

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-3 017 639 (NORDDEUTSCHE AFFINERIE) *Claims; examples* | 1,3-7, 10 | A 01 N 25/34 A 01 N 25/10 A 01 N 25/12 A 01 N 25/14 |
| | --- | | |
| Y | MANUFACTURING CHEMIST & AEROSOL NEWS, vol. 47, no. 1, January 1976, pages 25,26, London (GB); K.A.KHAN et al.: "Choosing the right tablet disintegrant". *The whole article* | 1,6,7 | |
| | --- | | |
| Y | US-A-4 182 620 (C.DENNINGER et al.) *Column 1, line 62 - column 2, line 63; examples 1,2; claim 1* | 1,4,7 9,10 | |
| | --- | | |
| P,X | EP-A-0 089 588 (BASF) *Page 1, line 31 - page 2, line 6; page 3, lines 1-7; claims 1,2,5,8* | 1,6,7 10 | **TECHNICAL FIELDS SEARCHED (Int. Cl. ³)** A 01 N |
| | ----- | | |

The present search report has been drawn up for all claims

| Place of search THE HAGUE | Date of completion of the search 24-08-1984 | Examiner FLETCHER A.S. |
|---|---|---|

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82